(19) Europäisches Patentamt
European Patent Office
Office européen des brevets

(11) **EP 2 571 185 A1**

(12) **EUROPEAN PATENT APPLICATION**
published in accordance with Art. 153(4) EPC

(43) Date of publication:
**20.03.2013 Bulletin 2013/12**

(51) Int Cl.:
***H04L 1/00*** *(2006.01)*

(21) Application number: **11780213.2**

(22) Date of filing: **12.05.2011**

(86) International application number:
**PCT/CN2011/073987**

(87) International publication number:
**WO 2011/140992 (17.11.2011 Gazette 2011/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2010 CN 201010178350**

(71) Applicant: **Huawei Technologies Co., Ltd.**
**Shenzhen, Guangdong 518129 (CN)**

(72) Inventors:
• **WANG, Jianguo**
**Shenzhen**
**Guangdong 518129 (CN)**

• **ZHOU, Yongxing**
**Shenzhen**
**Guangdong 518129 (CN)**
• **CHEN, Xiaobo**
**Shenzhen**
**Guangdong 518129 (CN)**
• **SUN, Weijun**
**Shenzhen**
**Guangdong 518129 (CN)**

(74) Representative: **Isarpatent**
**Patent- und Rechtsanwälte**
**Friedrichstrasse 31**
**80801 München (DE)**

(54) **METHOD AND APPARATUS FOR TRANSMITTING AND RECEIVING PRE-CODING INFORMATION**

(57)     A method and an apparatus for transmitting and receiving precoding information are disclosed. The method for transmitting the precoding information is applicable to a scenario in which the system bandwidth is divided into at least 1 bandwidth part (BP) and each BP includes at least one subband, and the method comprises: selecting a subband within a first BP according to a preset criterion or a predefined rule; and obtaining and transmitting precoding information of the subband selected in the first BP. The subband is selected in the BP, and the precoding information of the subband is obtained, which further improves the precoding performance of the subband.

Determine a subband within the first BP according to a preset rule, and obtain precoding information of the subband — 201

Transmit the precoding information of the determined subband within the first BP — 202

Receive the precoding information of the subband determined within the first BP — 203

FIG. 2

EP 2 571 185 A1

**Description**

**FIELD OF THE INVENTION**

The present invention relates to the field of communication technologies and, in particular, to a method and an apparatus for transmitting and receiving precoding information.

**BACKGROUND OF THE INVENTION**

With development of communication technologies, to improve data transmission performance, a data transmitting end such as a NodeB (node B), a BS (Base Station, base station) may perform preprocessing for the to-be-sent data according to precoding information (such as PMI (Precoding Matrix Indicator, precoding matrix indicator) fed back by a terminal (such as a UE (User Equipment, user equipment), a MS (Mobile Station, mobile station), etc.) and a locally pre-stored codebook, and then transmit the data to the terminal. In this way, the data transmitting process can be adaptive to the change in channel state, thereby improving the performance of data transmission. Therefore, how to transmit and receive the precoding information is very important.

The existing 3GPP LTE R8 (3rd Generation Partnership Project Long Term Evolution Release 8, 3rd generation partnership project long term evolution release 8) system uses a single codebook, and its precoding matrices are indexed by a single PMI (Precoding Matrix Indicator, precoding matrix indicator) and may be reported periodically or aperiodically on a physical uplink control channel (PUCCH) and a physical uplink shared channel (PUSCH), respectively.

The existing LTE system feeds back precoding information according to different frequency domain granularities. The system bandwidth is divided into N subbands. The PUCCH is capable of feeding back wideband PMI only (the entire system bandwidth uses the single PMI so that each subband uses the same PMI).

In the process of developing the present invention, the inventor found at least the following defects in the prior art:

The existing LTE-R8 system employs a periodical reporting mode of the PUCCH, which is characterized by low overhead but limited capacity. Only wideband PMI information can be transmitted. Therefore, it is necessary to further research the reporting mode and the used report type to improve system performance.

**SUMMARY OF THE INVENTION**

Embodiments of the present invention provide a method and apparatus for transmitting and receiving precoding information to improve precoding performance.

In one aspect, a method for transmitting precoding information is provided in an embodiment of the present invention. In the method, a system bandwidth is divided into at least 1 bandwidth part (BP), and each BP includes at least one subband, and the method comprises:

   selecting a subband within a first BP according to a preset criterion or a predefined rule; and obtaining and transmitting precoding information of the subband selected within the first BP.

In one aspect, a method for receiving precoding information is provided in an embodiment of the present invention. In the method, a system bandwidth is divided into at least 1 bandwidth part (BP), and each BP includes at least one subband, and the method comprises:

   receiving precoding information of a subband selected within a first BP, where the precoding information is transmitted by a terminal,
   where the subband selected within the first BP is selected by the terminal according to a preset criterion or a predefined rule.

In another aspect, an apparatus for transmitting precoding information is provided in an embodiment of the present invention. The apparatus is applicable to a scenario that a system bandwidth is divided into at least 1 bandwidth part (BP), and each BP includes at least one subband. The apparatus comprises:

   a subband selecting unit, configured to select a subband within a first BP according to a preset criterion or a predefined rule;
   an information obtaining unit, configured to obtain precoding information of the subband selected by the subband selecting unit within the first BP; and

an information transmitting unit, configured to transmit the precoding information of the subband selected in the first BP, where the precoding information is obtained by the information obtaining unit.

In another aspect, an apparatus for receiving precoding information is provided in an embodiment of the present invention. The apparatus is applicable to a scenario that a system bandwidth is divided into at least 1 bandwidth part (BP), and each BP includes at least one subband. The apparatus comprises:

an information receiving unit, configured to receive precoding information of a subband selected in a first BP, where the precoding information is transmitted by a terminal,
where the subband selected in the first BP is selected by the terminal according to a preset criterion or a predefined rule.

In the technical solutions provided in embodiments of the present invention, the system bandwidth is divided into at least one BP, a subband is selected in the BP, and the precoding information of the subband is obtained, which further improves the precoding performance of the subband and improves the overall performance of the system.

**BRIEF DESCRIPTION OF THE DRAWINGS**

FIG. 1 is a flowchart of a method for transmitting and receiving precoding information according to a first embodiment of the present invention;
FIG. 2 is a flowchart of a method for transmitting and receiving precoding information according to a second embodiment of the present invention;
FIG. 3 is a flowchart of a method for transmitting and receiving precoding information according to a third embodiment of the present invention;
FIG. 4 is a flowchart of a method for transmitting and receiving precoding information according to a fourth embodiment of the present invention;
FIG. 5 is a flowchart of a method for transmitting and receiving precoding information according to a fifth embodiment of the present invention;
FIG. 6 is a flowchart of a method for transmitting and receiving precoding information according to a sixth embodiment of the present invention;
FIG. 7 is a flowchart of a method for transmitting and receiving precoding information according to a seventh embodiment of the present invention;
FIG. 8 is a flowchart of a method for transmitting and receiving precoding information according to an eighth embodiment of the present invention;
FIG. 9 is a flowchart of a method for transmitting and receiving precoding information according to a ninth embodiment of the present invention;
FIG. 10 is a flowchart of a method for transmitting and receiving precoding information according to a tenth embodiment of the present invention;
FIG. 11 is a flowchart of a method for transmitting and receiving precoding information according to an eleventh embodiment of the present invention;
FIG. 12 is a flowchart of a method for transmitting and receiving precoding information according to a thirteenth embodiment of the present invention;
FIG. 13 is a flowchart of a method for transmitting and receiving precoding information according to a fourteenth embodiment of the present invention;
FIG. 14 is a flowchart of a method for transmitting and receiving precoding information according to a fifteenth embodiment of the present invention;
FIG. 15 is a flowchart of a method for transmitting and receiving precoding information according to a sixteenth embodiment of the present invention;
FIG. 16 is a flowchart of a method for transmitting and receiving precoding information according to a seventeenth embodiment of the present invention;
FIG. 17 is a flowchart of a method for transmitting and receiving precoding information according to an eighteenth embodiment of the present invention;
FIG. 18 is a flowchart of a method for transmitting and receiving precoding information according to a nineteenth embodiment of the present invention;
FIG. 19 is a flowchart of a method for transmitting and receiving precoding information according to a twentieth embodiment of the present invention;
FIG. 20 is a structural diagram of an apparatus for transmitting precoding information according to a twenty-first embodiment of the present invention; and

FIG. 21 is a structural diagram of an apparatus for receiving precoding information according to a twenty-second embodiment of the present invention.

**DETAILED DESCRIPTION OF THE EMBODIMENTS**

To make the technical solutions, objectives and merits of the present invention clearer, the following describes the embodiments of the present invention in more detail with reference to accompanying drawings.

**Embodiment 1**

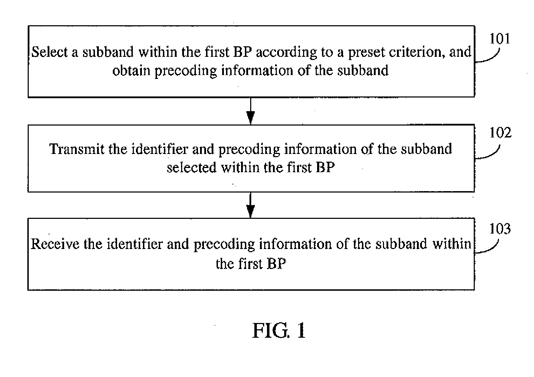

Referring to FIG. 1, a method for transmitting precoding information is provided in this embodiment. The system bandwidth is divided into at least 1 bandwidth part (BP), and each BP includes at least one subband. The method comprises:

101. A terminal selects a subband in a first BP according to a preset criterion, and obtains precoding information of the subband. The selected first BP may be obtained according to a predefined rule, for example, through consecutive scanning in the order of increasing frequency according to different reporting subframes.

Specifically, it is assumed that a corresponding bandwidth part reported through the subframe is BPj, which includes $N_j$ subbands. The terminal calculates subband identifier $i_0$ based on a preset criterion 1, as expressed in formula (1):

$$i_0 = \underset{i=0,1...N_j-1}{\arg\max} C\left(i\right) \tag{1}$$

In the formula above, $C(i)$ represents an objective function of subband i corresponding to the preset criterion 1. It should be noted that the step of selecting a subband within the first BP according to the preset criterion 1 comprises: selecting a subband with a greatest capacity or throughput within the first BP. For example, the preset criterion 1 is a throughput maximization criterion. The objective function corresponding to the criterion may be a throughput maximization function. The throughput maximization function may be calculated based on information capacity, or based on mutual information or a variation of mutual information (such as weighting of mutual information). Embodiments where the preset criterion is a capacity maximization criterion are similar to that described above, and will not be described redundantly here.

Further, after the selected subband is obtained, the precoding information on the subband is calculated according to the preset criterion 2 (here, the precoding information of the subband corresponding to the subband identifier $i_0$ may be a precoding matrix indicator $j_0$), as expressed in formula (2):

$$j_0 = \underset{j=0,...,|C|-1, W_j \in C}{\arg\max} f\left(i_0, W_j\right) \tag{2}$$

In the formula above, $W_j$ represents a codeword in the precoding matrix set W. $f(i_0, W_j)$ represents an objective function of the precoding matrix $W_j$ of the subband $i_0$ corresponding to the preset criterion 2. It should be noted that: The preset criterion 2 may be a throughput maximization criterion. The objective function corresponding to the criterion may be a throughput maximization function. The throughput maximization function may be calculated based on information capacity, or based on mutual information or a variation of mutual information (such as weighting of mutual information). Embodiments where the preset criterion 2 is a capacity maximization criterion are similar to that described above, and will not be described redundantly here.

Alternatively, a subband may be selected within the first BP according to a preset criterion 3. Meanwhile, the precoding information of the subband is obtained according to the preset criterion 3. Specifically, as shown in formula (3), the identifier $i_0$ and the precoding matrix indicator $j_0$ of the subband may be obtained through joint selection based on formula (3):

$$\left(i_0, j_0\right) = \underset{(i,j), i=0,1...N_j-1, j=0,...,|C|-1, W_j \in C}{\arg\max} f\left(i, W_j\right) \tag{3}$$

Further, $W_j$ in formula (2) or (3) may be selected from a single codebook C. In this case, PMI= $j_0$ is the precoding information of the subband corresponding to the subband identifier $i_0$. Besides, $W_j$ in formula (2) or (3) may be a function of two matrixes $W_{j_1}$ and $W_{j_2}$, where $W_{j_1}$ represents a wideband precoding matrix and comes from the codebook C1; $W_{j_2}$ represents a frequency selective precoding matrix and comes from the codebook C2. $j_1$ and $j_2$ are configured to obtain a matrix $W_{j_1}$ and a matrix $W_{j_2}$ according to the index of the codebook C1 and the codebook C2 respectively. In this case, the wideband precoding matrix indicator and the frequency selective precoding matrix indicator corresponding to $j_0$ are $j_{0,1}$ and $j_{0,2}$ respectively. In this case, $j_{0,2}$ is the precoding information of the subband corresponding to the subband identifier $i_0$.

Further, the wideband precoding information $j_{0,1}$ may be selected separately according to a preset criterion 4 through formula (4):

$$j_{0,1} = \underset{j_k=0,\ldots,|C_1|-1, W_{j_k,1} \in C_1}{\arg \max} g\left(W_{j_k,1}\right) \tag{4}$$

In the formula above, $W_{k,1}$ represents a codeword in the wideband precoding matrix set C1, and $g\left(W_{k,1}\right)$ represents an objective function of the wideband precoding matrix $W_j$ corresponding to the preset criterion. It should be noted that: The preset criterion 4 may be a throughput maximization criterion. The objective function corresponding to the criterion may be a throughput maximization function. The throughput maximization function may be calculated based on information capacity, or based on mutual information or a variation of mutual information (such as weighting of mutual information). Embodiments where the preset criterion 4 is a capacity maximization criterion are similar to that described above, and will not be described redundantly here.

Besides, considering the precoding matrix's dependency on the wideband precoding information, the wideband precoding information may be protected in the transmission process to improve reliability of the wideband precoding information. For details, see the description in embodiment 11.

Further, referring to FIG. 1, after a subband is selected within the first BP and the precoding information of the subband within the first BP is obtained, the method may further comprise:

102. The terminal feeds back the identifier of the subband selected in the first BP and the precoding information of the subband to the data transmitting end.

Specifically, the terminal performs joint encoding for the subband identifier $i_0$, and the precoding matrix indicator $j_0$ (if a single codebook is applied) or the frequency selective precoding matrix indicator $j_{0,2}$ corresponding to $j_0$ (if a dual codebook structure is applied, and, in this scenario, the wideband precoding information may be fed back separately) obtained in step 101, and feeds back the jointly encoded information to the data transmitting end through a PUCCH. Nevertheless, the identifier and precoding information of the subband may also be fed back to the data transmitting end through a PUSCH instead.

103. The data transmitting end receives the identifier and precoding information of the subband within the first BP.

It should be noted that the identifiers and precoding information of subbands in different BPs may be transmitted in different subframes. The wideband precoding information (such as wideband precoding matrix indicator $j_{0,1}$) and the frequency selective precoding information (such as frequency selective precoding matrix indicator $j_{0,2}$) may be reported in the same subframe or in different subframes.

Through the method for transmitting and receiving the precoding information in this embodiment, the system bandwidth is divided into at least one BP, a subband is selected within the BP, and the precoding information of the subband is obtained, which further improves the precoding performance of the subband. The selected subband has a greater probability of being scheduled to the UE, which improves the overall performance of the system.

**Embodiment 2**

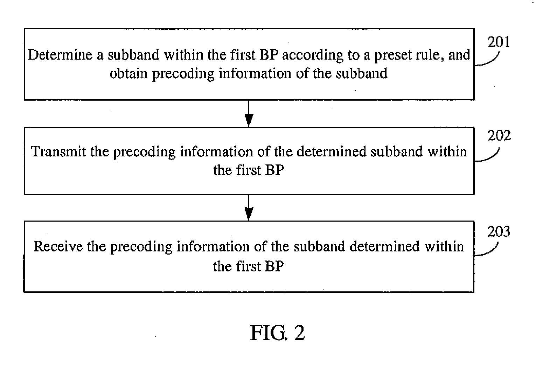

Referring to FIG. 2, a method for transmitting and receiving precoding information is provided in this embodiment. The system bandwidth is divided into at least 1 bandwidth part (BP), and each BP includes at least one subband. The method comprises:

201. According to a rule predefined with the data transmitting end, the terminal determines a subband selected within the first BP, and obtains precoding information of the subband.

Specifically, determining, by the terminal, a subband selected within the first BP according to the rule predefined with the data transmitting end may comprise: obtaining the first BP through consecutive scanning in the order of increasing frequency according to different reporting subframes, and obtaining the subband within the first BP through consecutive scanning in the order of increasing frequency, or obtaining the subband within the first BP through consecutive scanning in the order of decreasing frequencies, or obtaining the corresponding subband according to a predefined randomization function.

Further, after the selected subband is obtained, the precoding information on the subband is calculated according to the preset criterion 2, as expressed in formula (2):

Further, referring to FIG. 2, after the subband within the first BP and the precoding information of the subband are determined, the method may further comprise:

202. The terminal feeds back the precoding information of the subband selected within the first BP to the data transmitting end.

Specifically, the terminal performs encoding of the precoding information $j_0$ (if a single codebook is applied), or the precoding information $j_{0,2}$ of the frequency selectivity part corresponding to $j_0$ (if a dual codebook structure is applied, and, in this case, the wideband precoding information may be fed back separately) obtained in step 201, and feeds back the encoded information to the data transmitting end through a PUCCH. Nevertheless, the subband precoding information may also be fed back to the data transmitting end through a PUSCH instead.

203. The data transmitting end receives the precoding information of the subband within the first BP.

Through the method for transmitting and receiving the precoding information in this embodiment, the system bandwidth is divided into at least one BP, a subband is selected within the BP, and the precoding information of the subband is obtained, which further improves the precoding performance of the subband. The rule for selecting the subband and the BP may be predefined by the data transmitting end and the terminal. Therefore, it is not necessary to transmit the subband identifier, and the overhead is saved.

**Embodiment 3**

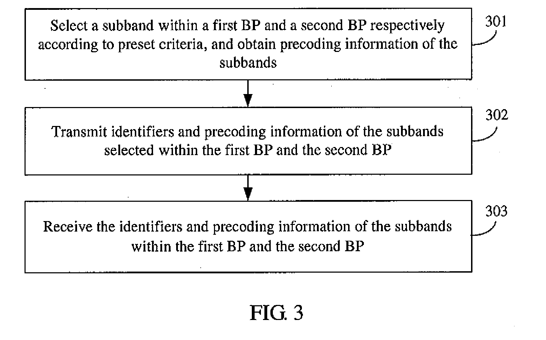

Referring to FIG. 3, a method for transmitting and receiving precoding information is provided in this embodiment. The system bandwidth is divided into at least 2 BPs. The method comprises:

301. The UE selects a subband within the first BP and the second BP respectively according to a preset criterion, and obtains the precoding information of the two subbands respectively. The selected first BP and second BP may be obtained according to a predefined rule, for example, through consecutive scanning in the order of increasing frequency according to different reporting subframes. Specifically, for each BPj, the corresponding subband and its precoding information may be obtained in the following way:

It is assumed that BPj includes $N_j$ subbands. The terminal calculates the subband identifier $i_0$ based on a preset criterion 1, as expressed in formula (1). Further, after the selected subband is obtained, the precoding information of the subband is calculated according to the preset criterion 2, as expressed in formula (2). Alternatively, the terminal obtains the subband identifier $i_0$ and the precoding matrix indicator $j_0$ based on a preset criterion 3, and specifically, through joint selection based on formula (3). The terminal obtains the wideband precoding information according to the preset criterion 4, and specifically, through calculation based on formula (4).

The expressions "first BP" and "second BP" herein are intended to differentiate BPs only, and do not restrict the location, order, or number of the BPs.

302. The terminal feeds back the identifier and precoding information of the subband selected within the first BP, and the identifier and precoding information of the subband selected within the second BP, to the data transmitting end.

It should be noted that the precoding information of the subband may be the precoding matrix indicator (PMI) of the subband (if a single codebook is applied) or the frequency selectivity part of the precoding information (if the precoding matrix is composed of two parts: wideband precoding information and frequency selectivity precoding information).

Specifically, the terminal performs joint encoding for the subband identifier and subband precoding information (if a single codebook is applied) obtained in step 301 or the corresponding frequency selectivity precoding information (if a dual codebook structure is applied, and, in this case, the wideband precoding information may be fed back separately), and feeds back the jointly encoded information to the data transmitting end through a PUCCH. Nevertheless, the identifier and precoding information of the subband may also be fed back to the data transmitting end through a PUSCH instead.

303. The data transmitting end receives the identifier and corresponding precoding information of the subband within the first BP, and the identifier and corresponding precoding information of the subband within the second BP.

It should be noted that the identifiers and the precoding information of the subbands within the first BP and the second BP may be transmitted in the same subframe. A subframe used for transmitting identifier and precoding information of a subband in other BPs, may be the same as or different from, the subframe used for transmitting the identifiers and precoding information of the subbands within the first BP and the second BP.

It should be noted that the wideband precoding information and the frequency selectivity precoding information may be reported in the same subframe or in different subframes. The wideband precoding information and the frequency selectivity precoding information may be encoded jointly, or encoded separately.

Through the method for transmitting and receiving the precoding information in this embodiment, the system bandwidth is divided into at least two BPs, a subband is selected within the BP, and the precoding information of the subband is obtained, which further improves precoding performance of the subband. The selected subband has a greater probability of being scheduled to the UE, which improves the overall performance of the system.

**Embodiment 4**

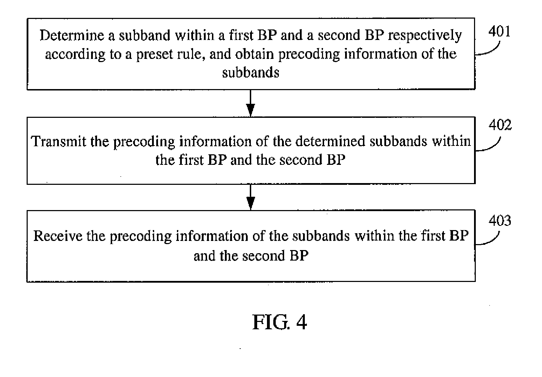

Referring to FIG. 4, a method for transmitting and receiving precoding information is provided in this embodiment. The system bandwidth is divided into at least 2 bandwidth parts (BP), and each BP includes at least one subband. The method comprises:

401. According to a second rule predefined with the data transmitting end, the terminal selects a subband within the first BP and the second BP respectively, and obtains precoding information of the two subbands respectively. The first BP and second BP may be obtained according to a predefined first rule, for example, through consecutive scanning in ascending order of frequencies according to different reporting subframes.

Specifically, for each BPj, the corresponding subband and its precoding information may be obtained in the following way:

Specifically, a second rule predefined by the terminal and the data transmitting end may be: obtaining a subband in the BP through consecutive scanning in ascending order of frequencies, or obtaining a subband in the BP through consecutive scanning in descending order of frequencies, or obtaining a corresponding subband according to a predefined function.

Further, after the selected subband is obtained, the precoding information on the subband is calculated according to the preset criterion 2, as expressed in formula (2).

Further, referring to FIG. 4, after the subbands in the first BP and the second BP and also the precoding information of the subbands are determined, the method may further comprise:

402. The terminal feeds back the precoding information of the subbands selected within the first BP and the second BP to the data transmitting end.

Specifically, the terminal performs joint encoding for the first BP's and the second BP's subband precoding information (if a single codebook is applied) obtained in step 401, or corresponding frequency selectivity part precoding information (if a dual codebook structure is applied, and, in this case, the wideband precoding information may be fed back separately), and feeds back the jointly encoded information to the data transmitting end through a PUCCH. Nevertheless, the subband precoding information may also be fed back to the data transmitting end through a PUSCH instead.

403. The data transmitting end receives the precoding information of the subbands selected within the first BP and the second BP.

It should be specially noted that the precoding information of the subbands selected in the first BP and the second BP is transmitted in the same subframe. The subframe used for transmitting precoding information of a subband in other BPs, may be the same as or different from, the subframe used for transmitting the precoding information of the subbands in the first BP and the second BP.

Further, the wideband precoding information and the frequency selectivity precoding information may be reported in the same subframe or in different subframes. The wideband precoding information and the frequency selective precoding information may be encoded jointly, or encoded separately.

Through the method for transmitting and receiving the precoding information in this embodiment, the system bandwidth is divided into at least 2 BPs, subbands are selected within the BPs, and the precoding information of the subbands is obtained, which further improves the precoding performance of the subband. The selected subbands are predefined by the data transmitting end and the terminal. Therefore, it is not necessary to transmit subband identifiers, and the overhead is saved.

**Embodiment 5**

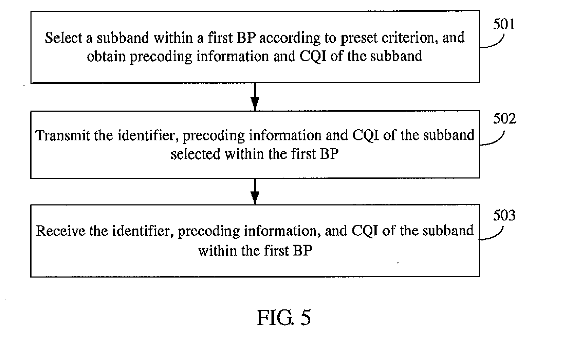

Referring to FIG. 5, a method for transmitting precoding information is provided in this embodiment. The system bandwidth is divided into at least 1 bandwidth part (BP), and each BP includes at least one subband. The method comprises:

501. A terminal selects a subband within a first BP according to a preset criterion, and obtains precoding information of the subband. The first BP may be obtained according to a predefined rule, for example, through consecutive scanning in the order of increasing frequency according to different reporting subframes.

Specifically, it is assumed that the corresponding bandwidth part reported through the subframe is BPj, which includes $N_j$ subbands. The terminal calculates the subband identifier $i_0$ based on a preset criterion 1, as expressed in formula (1).

Further, after the selected subband is obtained, the precoding information on the subband is calculated according to the preset criterion 2, as expressed in formula (2). Alternatively, the terminal calculates the subband identifier $i_0$ and the precoding matrix indicator $j_0$ based on a preset criterion 3, as expressed in formula (3). Further, wideband precoding information $j_{0,1}$ may also be calculated according to the preset criterion 4 through formula (4).

Further, after a subband is selected within the first BP and precoding information of the subband is obtained, the method may further comprise: calculating channel quality indicator (CQI) of the subband based on the precoding information of the subband selected within the first BP.

Further, referring to FIG. 5, after the subband is selected within the first BP, and the precoding information and the CQI are determined, the method may further comprise:

502. The terminal feeds back the identifier of the subband selected within the first BP, and the precoding information and the CQI of the subband to the data transmitting end.

Specifically, the terminal performs joint encoding of the subband identifier $i_0$, and subband precoding information $j_0$ (if a single codebook is applied) obtained in step 501 or frequency selectivity precoding information $j_{0,2}$ corresponding to $j_0$ (if a dual codebook structure is applied, and, in this case, the wideband precoding information may be fed back separately), and the CQI, and feeds back the jointly encoded information to the data transmitting end through a PUCCH. Nevertheless, the identifier, precoding information and CQI of the subband may be fed back to the data transmitting end through a PUSCH instead.

503. The data transmitting end receives the identifier, precoding information and CQI of the subband in the first BP.

It should be specially noted that the identifiers and precoding information of subbands in different BPs are transmitted in different subframes. Further, the wideband precoding information and the frequency selectivity precoding information may be reported in the same subframe or in different subframes.

Through the method for transmitting and receiving the precoding information in this embodiment, the system bandwidth is divided into at least one BP, a subband is selected within the BP, and the precoding information of the subband is obtained, which further improves the precoding performance of the subband. The selected subband has a greater probability of being scheduled to the UE, which improves the overall performance of the system. The CQI and the precoding information may be transmitted simultaneously to improve frequency scheduling gain and facilitate accurate selection of the modulation coding mode.

**Embodiment 6**

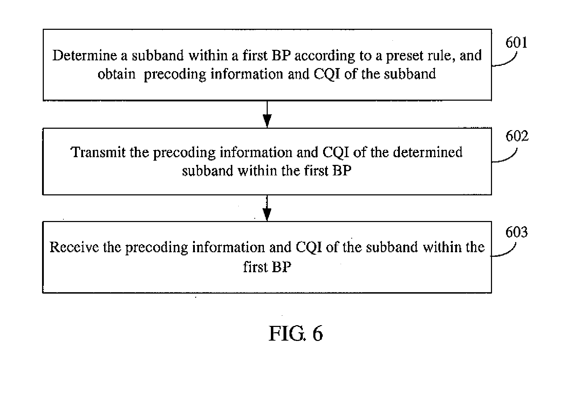

Referring to FIG. 6, a method for transmitting and receiving precoding information is provided in this embodiment. The system bandwidth is divided into at least 1 bandwidth part (BP), and each BP includes at least one subband. The method comprises:

601. According to a second rule predefined with the data transmitting end, a terminal determines a subband selected within the first BP, and obtains precoding information of the subband. The first BP is obtained according to a predefined first rule, for example, through consecutive scanning in ascending order of frequencies according to different reporting subframes.

Specifically, the second rule predefined by the terminal and the data transmitting end may be: obtaining a subband within the BP through consecutive scanning in the order of increasing frequency, or obtaining a subband within the BP through consecutive scanning in the order of decreasing frequency, or obtaining a corresponding subband according to a predefined randomization function.

Further, after the selected subband is obtained, the precoding information on the subband is calculated according to the preset criterion 2, as expressed in formula (2).

Further, after a subband is selected within the first BP and the precoding information of the subband is obtained, the method may further comprise: calculating channel quality indicator (CQI) of the subband based on the precoding information of the subband selected within the first BP.

Further, referring to FIG. 6, after the subband in the first BP, and the precoding information and CQI of the subband are determined, the method may further comprise:

602. The terminal feeds back the precoding information and CQI of the subband selected within the first BP to the data transmitting end.

Specifically, the terminal performs a joint encoding of the precoding information $j_0$ (if a single codebook is applied) obtained in step 601, or frequency selective precoding information $j_{0,2}$ corresponding to $j_0$ (if a dual codebook structure is applied, and, in this case, wideband precoding information may be fed back separately), and the CQI, and feeds back the jointly encoded information to the data transmitting end through a PUCCH.

603. The data transmitting end receives the precoding information and CQI of the subband within the first BP.

Through the method for transmitting and receiving the precoding information in this embodiment, the system bandwidth is divided into at least one BP, a subband is selected within the BP, and the precoding information of the subband is obtained, which further improves the precoding performance of the subband. The selected subband is predefined by the data transmitting end and the terminal. Therefore, it is not necessary to transmit the subband identifier, and the overhead is saved. The CQI and the precoding information may be transmitted simultaneously to improve frequency scheduling gain and facilitate accurate selection of the modulating and coding mode.

**Embodiment 7**

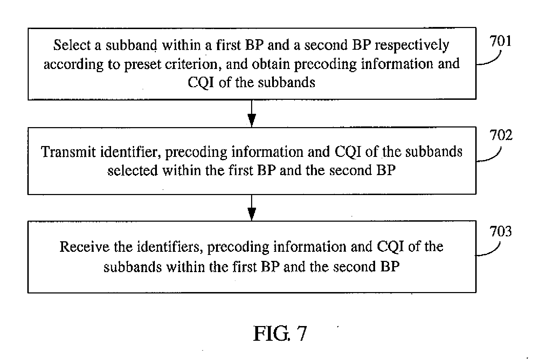

Referring to FIG. 7, a method for transmitting and receiving precoding information is provided in this embodiment. The system bandwidth is divided into at least 2 BPs. The method comprises:

701. An UE selects a subband in a first BP and a second BP respectively according to a preset criterion, and obtains precoding information of the two subbands respectively. The first BP and second BP may be obtained according to a predefined rule, for example, through consecutive scanning in the order of increasing frequency according to different reporting subframes. Specifically, for each BPj, the corresponding subband and the precoding information of the subband may be obtained in the following way:

It is assumed that BPj includes $N_j$ subbands. The terminal calculates subband identifier $i_0$ based on a preset criterion 1, as expressed in formula (1). Further, after the selected subband is obtained, the precoding information of the subband is calculated according to a preset criterion 2, as expressed in formula (2). Alternatively, the terminal may obtain the subband identifier $i_0$ and the precoding matrix indicator $j_0$ through joint selection based on formula (3), and may calculate the wideband precoding information based on formula (4).

Further, after a subband is selected within the first BP and the second BP, and the precoding information of the subband is determined, the method may further comprise: calculating channel quality indicator (CQI) of the subband based on the precoding information of the subband selected within the first BP; and calculating channel quality indicator (CQI) of the subband based on the precoding information of the subband selected within the second BP.

702. The terminal feeds back the identifier of the subband selected within the first BP, the precoding information and CQI of the corresponding subband, the identifier of the subband selected within the second BP, and the precoding information and CQI of the corresponding subband, to the data transmitting end.

It should be noted that for a single codebook, the precoding information of the subband may be a precoding matrix indicator (PMI) of the subband; for dual codebook, (namely, the precoding matrix is composed of two parts: wideband precoding matrix and frequency selectivity precoding matrix), the precoding information of the subband may be frequency selectivity part of the precoding information.

Specifically, the terminal performs joint encoding for the identifier, precoding information and CQI of the subband that are obtained in step 701, and feeds back the encoded information to the data transmitting end through a PUCCH. Nevertheless, the identifier and precoding information of the subband may also be fed back to the data transmitting end through a PUSCH instead.

703. The data transmitting end receives the identifier of the subband in the first BP, the precoding information and CQI of this subband, the identifier of the subband in the second BP, and the precoding information and CQI of this subband.

It should specially be noted that the identifiers, the precoding information and CQI of the subbands in the first BP and the second BP may be transmitted in the same subframe. The subframe used for transmitting the identifier and precoding information of the subband in other BPs, may be the same as or different from, the subframe used for transmitting the identifiers, precoding information and CQI of the subbands in the first BP and the second BP.

Further, the wideband precoding information and the frequency selectivity precoding information may be reported in the same subframe or in different subframes. The wideband precoding information and the frequency selectivity precoding information may be encoded jointly, or encoded separately.

Through the method for transmitting and receiving the precoding information in this embodiment, the system bandwidth is divided into at least two BPs, a subband is selected within each BP, and the precoding information of the subbands is obtained, which further improves the precoding performance of the subbands. The selected subbands have a greater probability of being scheduled to the UE, which improves the overall performance of the system. The CQI and the precoding information may be transmitted simultaneously to improve the frequency scheduling gain and facilitate accurate selection of the modulating and coding mode.

**Embodiment 8**

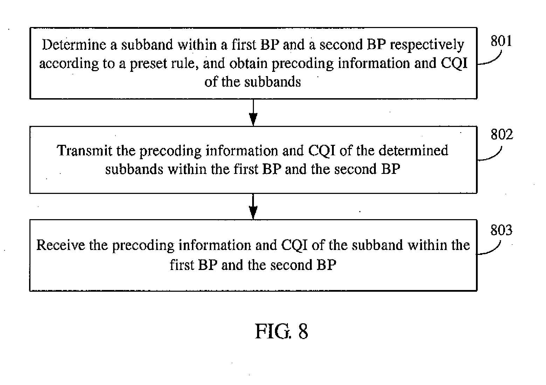

Referring to FIG. 8, a method for transmitting and receiving precoding information is provided in this embodiment. The system bandwidth is divided into at least 2 bandwidth parts (BP), and each BP includes at least one subband. The method comprises:

801. According to a second rule predefined with a data transmitting end, a terminal selects a subband within a first BP and a second BP respectively, and obtains precoding information of the two subbands respectively. The first BP and second BP may be obtained according to a predefined first rule, for example, through consecutive scanning in the order of increasing frequency according to different reporting subframes.

Specifically, for each BPj, the corresponding subband and its precoding information may be obtained in the following way:

Specifically, the second rule predefined by the terminal and the data transmitting end may be: obtaining a subband in the BP through consecutive scanning in the order of increasing frequency, or obtaining a subband in the BP through consecutive scanning in the order of deceasing frequency, or obtaining a corresponding subband according to a predefined function.

Further, after the selected subband is obtained, the precoding information on the subband is calculated according to the preset criterion 2, as expressed in formula (2).

Further, after subbands are selected in the first BP and the second BP, and the precoding information of the subbands is obtained, the method may further comprise: calculating channel quality indicator (CQI) of the subband based on the precoding information of the subband selected within the first BP; and calculating channel quality indicator (CQI) of the subband based on the precoding information of the subband selected within the second BP.

Further, referring to FIG. 8, after the subbands within the first BP and the second BP as well as the precoding information and CQI of the subbands are determined, the method may further comprise:

802. The terminal feeds back the precoding information and CQI of the subbands selected within the first BP and the second BP to the data transmitting end.

Specifically, the terminal performs joint encoding of the first BP's and the second BP's subband precoding information (if a single codebook is applied) obtained in step 801, or corresponding frequency selective precoding information (if a dual codebook structure is applied, and, in this case, wideband precoding information may be fed back separately) and CQI, and feeds back the jointly encoded information to the data transmitting end through a PUCCH. Nevertheless, the precoding information and the CQI of the subband may also be fed back to the data transmitting end through a PUSCH instead.

803. The data transmitting end receives the precoding information and CQI of the subbands selected within the first BP and the second BP.

It should be specially noted that the precoding information and the CQI of the subbands selected within the first BP and the second BP are transmitted in a same subframe. A subframe used for transmitting the precoding information and CQI of the subband in other BPs, may be the same as or different from, the subframe used for transmitting the precoding information and CQI of the subbands in the first BP and the second BP.

Further, the wideband precoding information and the frequency selective precoding information may be reported in a same subframe or in different subframes. The wideband precoding information and the frequency selectivity precoding information may be encoded jointly, or encoded separately.

Through the method for transmitting and receiving the precoding information in this embodiment, the system bandwidth is divided into at least 2 BPs, the subbands are selected within the BPs, and the precoding information of the subbands is obtained, which further improves the precoding performance of the subband. The selected subbands are predefined by the data transmitting end and the terminal. Therefore, it is not necessary to transmit the subband identifier, and the overhead is saved. The CQI and the precoding information may be transmitted simultaneously to improve frequency scheduling gain and facilitate accurate selection of the modulating and coding mode.

**Embodiment 9**

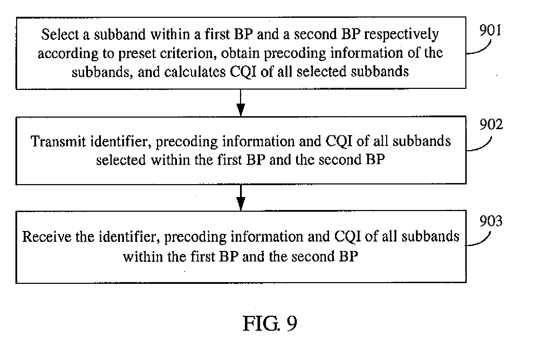

Referring to FIG. 9, a method for transmitting and receiving precoding information is provided in this embodiment. The system bandwidth is divided into at least 2 BPs. The method comprises:

901. An UE selects a subband within a first BP and a second BP respectively according to a preset criterion, and obtains precoding information of the two subbands respectively. The first BP and second BP may be obtained according to a predefined rule, for example, through consecutive scanning in the order of increasing frequency according to different reporting subframes. Specifically, for each BPj, the corresponding subband and its precoding information may be obtained in the following way:

It is assumed that BPj includes $N_j$ subbands. The terminal calculates subband identifier $i_0$ based on a preset criterion 1, as expressed in formula (1). Further, after the selected subband is obtained, the precoding information of the subband is calculated according to a preset criterion 2, as expressed in formula (2). Alternatively, the terminal calculates the subband identifier $i_0$ and precoding matrix indicator $j_0$ based on a preset criterion 3, as expressed in formula (3). Further, wideband precoding information $j_{0,1}$ may also be calculated according to a preset criterion 4 through formula (4).

Further, after the subbands are selected within the first BP and the second BP, and the precoding information of the subbands are determined, the method may further comprise: calculating CQI of all selected subbands based on the precoding information of the subbands selected within the first BP and the second BP. It should be specially noted that embodiment 7 differs from this embodiment in that: In embodiment 7, the CQI of each selected subband is calculated respectively.

902. The terminal feeds back the identifier, precoding information, and CQI of all subbands selected in the first BP and the second BP to the data transmitting end.

It should be noted that the precoding information of the subband may be a precoding matrix indicator (PMI) of the subband (if a single codebook is applied) or frequency selectivity part of the precoding information (if the precoding matrix is composed of two parts: wideband precoding information and frequency selectivity precoding information).

Specifically, the terminal performs joint encoding of the subband identifier and subband precoding information (if a single codebook is applied) obtained in step 901 or the corresponding frequency selectivity precoding information (if a dual codebook structure is applied, and, in this case, the wideband precoding information may be fed back separately) and CQI, and feeds back the jointly encoded information to the data transmitting end through a PUCCH. Nevertheless, the identifier and precoding information of the subbands may also be fed back to the data transmitting end through a PUSCH instead.

903. The data transmitting end receives the identifier, precoding information and CQI of all subbands selected in the first BP and the second BP.

It should be specially noted that the identifiers, precoding information and CQI of the subbands in the first BP and the second BP may be transmitted in a same subframe. A subframe used for transmitting the identifier and precoding information of a subband in other BPs, may be the same as or different from, the subframe used for transmitting the identifiers, precoding information and CQI of the subbands in the first BP and the second BP.

Further, the wideband precoding information and the frequency selectivity precoding information may be reported in a same subframe or in different subframes. The wideband precoding information and the frequency selectivity precoding information may be encoded jointly, or encoded separately.

Through the method for transmitting and receiving the precoding information in this embodiment, the system bandwidth is divided into at least two BPs, the subband are selected within the BPs, and the precoding information of the subbands is obtained, which further improves the precoding performance of the subbands. The selected subbands have a greater probability of being scheduled to the UE, which improves the overall performance of the system. The CQI and the precoding information may be transmitted simultaneously to improve the frequency scheduling gain and facilitate accurate selection of the modulating and coding mode.

**Embodiment 10**

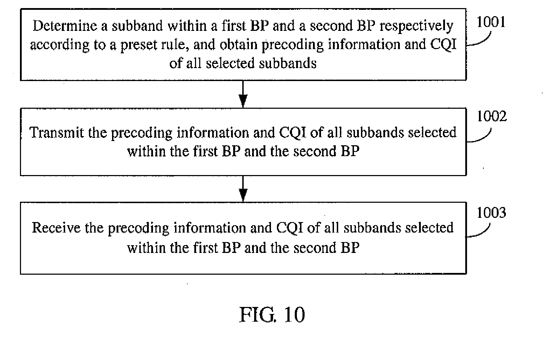

Referring to FIG. 10, a method for transmitting and receiving precoding information is provided in this embodiment. The system bandwidth is divided into at least 2 bandwidth parts (BP), and each BP includes at least one subband. The method comprises:

1001. According to a second rule predefined with a data transmitting end, a terminal selects a subband within a first BP and a second BP respectively, and obtains precoding information of the two subbands respectively. The first BP is obtained according to a predefined first rule, for example, through consecutive scanning in ascending order of frequencies according to different reporting subframes.

Specifically, for each BPj, the corresponding subband and its precoding information may be obtained in the following way:

Specifically, the second rule predefined by the terminal and the data transmitting end may be: obtaining the subband within the BP through consecutive scanning in the order of increasing frequency, or obtaining the subband within the BP through consecutive scanning in the order of decreasing frequency, or obtaining a corresponding subband according to a predefined function.

Further, after the selected subbands are obtained, the precoding information on the subbands is calculated according to the preset criterion 2, as expressed in formula (2).

Further, after a subband is selected within the first BP and the second BP respectively, and the precoding information of the subbands are obtained, the method may further comprise: calculating CQI of all selected subbands based on the precoding information of the subbands selected within the first BP and the second BP. It should be specially noted that embodiment 8 differs from this embodiment in that: calculating the CQI of each selected subband respectively based on the precoding information of the selected subbands.

Further, referring to FIG. 10, after the subbands in the first BP and the second BP as well as the precoding information and CQI of all selected subbands are determined, the method may further comprise:

1002. The terminal feeds back the precoding information and CQI of all subbands selected within the first BP and the second BP to the data transmitting end.

Specifically, the terminal performs joint encoding of the first BP's and the second BP's subband precoding information (if a single codebook is applied) obtained in step 1001, or corresponding frequency selective precoding information (if a dual codebook structure is applied, and, in this case, wideband precoding information may be fed back separately) and CQI, and feeds back the jointly encoded information to the data transmitting end through a PUCCH. Nevertheless, the precoding information and the CQI of the subbands may also be fed back to the data transmitting end through a PUSCH instead.

1003. The data transmitting end receives the precoding information and CQI of all subbands selected within the first BP and the second BP.

It should be specially noted that the precoding information and the CQI of the subbands within the first BP and the second BP are transmitted in the same subframe. A subframe used for transmitting the precoding information and CQI of a subband in other BPs, may be the same as or different from, the subframe used for transmitting the precoding information and CQI of the subbands in the first BP and the second BP.

Further, the wideband precoding information and the frequency selective precoding information may be reported in the same subframe or in different subframes. The wideband precoding information and the frequency selective precoding information may be encoded jointly, or encoded separately.

Through the method for transmitting and receiving the precoding information in this embodiment, the system bandwidth is divided into at least 2 BPs, the subbands are selected within the BPs, and the precoding information of the subbands are obtained, which further improves the precoding performance of the subbands. The selected subbands are predefined by the data transmitting end and the terminal. Therefore, it is not necessary to transmit the subband identifiers, and the overhead is saved. The CQI and the precoding information may be transmitted simultaneously to improve frequency scheduling gain and facilitate accurate selection of the modulating and coding mode.

## Embodiment 11

Considering the precoding matrix's dependency on the wideband precoding information, the wideband precoding information may be protected in the transmission process to improve reliability of the wideband precoding information. This embodiment provides a method for feeding back wideband precoding information.

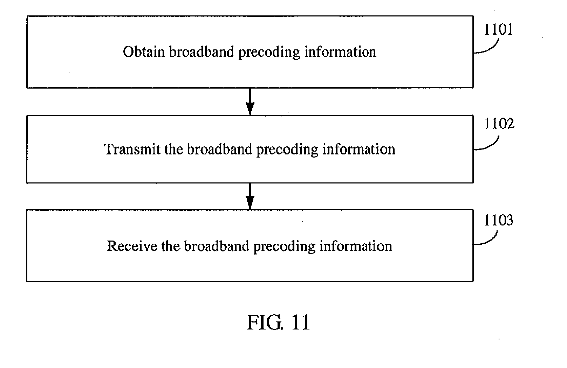

Referring to FIG. 11, a method for transmitting and receiving precoding information is provided in this embodiment. The method comprises:

1101. A terminal calculates the precoding information on the entire system bandwidth (called "wideband precoding information") according to a preset criterion.

Specifically, the terminal may calculate the wideband precoding information according to the preset criterion 4 through formula (4).

Further, referring to FIG. 11, after the wideband precoding information is determined, the method may further comprise:

1102. The terminal feeds back the wideband precoding information to a data transmitting end.

Specifically, the terminal encodes the wideband precoding information and feeds it back to the data transmitting end through a PUCCH. Nevertheless, the wideband precoding information may also be fed back to the data transmitting end through a PUSCH instead. It should be especially noted that the wideband precoding information does not undergo joint encoding together with other information such as CQI or RI (Rank Indicator, rank indicator) information.

1103. The data transmitting end receives the wideband precoding information.

Further, the wideband precoding information and the frequency selectivity precoding information may be reported in the same subframe or in different subframes.

Through the method for transmitting and receiving the precoding information in this embodiment, the wideband precoding information is transmitted and received separately, which improves reliability of the wideband precoding information and reduces error propagation caused when the wideband precoding information is used together with the subband precoding information.

## Embodiment 12

It should be noted that this embodiment differs from embodiments 1-6 in that: in this embodiment, the subband precoding information and the CQI may be transmitted separately, or transmitted and received simultaneously, depending on the upper-layer configuration.

Specifically, when the upper-layer configuration requires separate transmitting of the CQI, if the last reported subband precoding information already exists, the CQI is calculated according to the last reported subband precoding information; otherwise, the CQI is calculated according to the last reported wideband precoding information.

When the upper-layer configuration requires separate transmitting of the precoding information, any one of embodiments 1-4 may be applied; when the upper-layer configuration requires simultaneous transmitting of the precoding information and the CQI, any one of embodiments 5-6 may be applied.

Through the method for transmitting and receiving precoding information and CQI in this embodiment, the system configuration flexibility is improved.

**Embodiment 13**

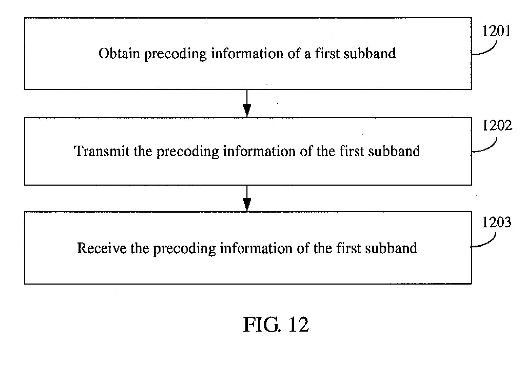

Referring to FIG. 12, a method for transmitting and receiving precoding information is provided in this embodiment. The system bandwidth is divided into at least 1 bandwidth part (BP). The subband in this embodiment is a virtual subband, the virtual subband is equal to the BP in size, and the size of the virtual subband may be the same as or different from the size of a subband defined in an actual system. The method comprises:

1201. The terminal obtains precoding information of a first subband, namely, a first BP, according to a preset criterion. The first BP may be obtained according to a predefined rule, for example, through consecutive scanning in the order of increasing frequency according to different reporting subframes.

Specifically, after the selected first subband is obtained, the precoding information of the first subband is calculated according to a preset criterion 5, as expressed in formula (5):

$$j_0 = \underset{j=0,\ldots,|C|-1, W_j \in C}{\arg \max} h\left(BP\_index, W_j\right) \qquad (5)$$

In the formula above, $W_j$ represents a codeword in the precoding matrix set W. $BP\_index$ is the index of the BP. In this case, the identifier of the first subband is equal to the BP index $BP\_index$, $h(BP\_index, W_j)$ represents an objective function of the first subband $BP\_index$ corresponding to the preset criterion 5 and the precoding matrix $W_j$. It should be noted that: The preset criterion 5 may be a throughput maximization criterion. The objective function corresponding to the criterion may be a throughput maximization function. The throughput maximization function may be calculated based on information capacity, or based on mutual information or a variation of mutual information (such as weighting of mutual information).

Further, $W_j$ in formula (5) may be selected from a single codebook C. In this case, PMI = $j_0$ is the precoding information of the corresponding first subband. Besides, $W_j$ in formula (5) may be a function of two matrixes $W_{j_1}$, and $W_{j_2}$, where $W_{j_1}$ represents a wideband precoding matrix and comes from the codebook C1; $W_{j_2}$ represents a frequency selective precoding matrix and comes from the codebook $C_2$. $j_1$ and $j_2$ are configured to obtain a matrix $W_{j_1}$ and a matrix $W_{j_2}$ according to the index of the codebook C1 and the codebook C2 respectively. In this case, the wideband precoding matrix indicator and the frequency selective precoding matrix indicator corresponding to $j_0$ are $j_{0,1}$ and $j_{0,2}$ respectively. In this case, $j_{0,2}$ is the precoding information corresponding to the first subband $BP\_index$. Further, the wideband precoding information $j_{0,1}$ may be selected separately through formula (4).

Further, referring to FIG. 12, after the precoding information of the first subband is determined, the method may further comprise:

1202. The terminal feeds back the precoding information of the first subband to a data transmitting end.

Specifically, the terminal performs encoding of the first subband's precoding information (if a single codebook is applied) obtained in step 1201 or the corresponding frequency selective precoding information (if a dual codebook structure is applied, and, in this case, the wideband precoding information may be fed back separately), and feeds back the encoded information to the data transmitting end through a PUCCH. Nevertheless, the encoded information may also be fed back to the data transmitting end through a PUSCH instead.

1203. The data transmitting end receives the precoding information of the first subband.

It should be noted that the BP may include one or more subbands defined in the actual system.

Further, the wideband precoding information and the precoding information of the first subband may be reported in the same subframe or in different subframes.

Through the method for transmitting and receiving the precoding information in this embodiment, the system bandwidth is divided into at least 1 BP, the precoding information of the subband is obtained and fed back, which further improves the precoding performance of the system.

**Embodiment 14**

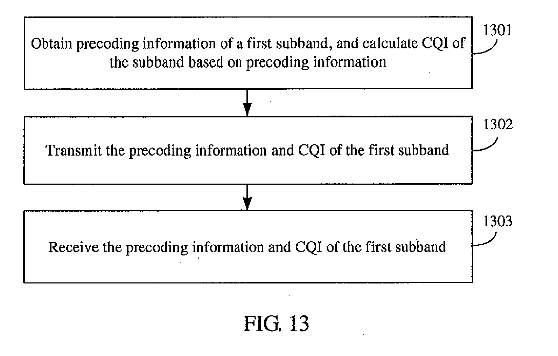

Referring to FIG. 13, a method for transmitting and receiving precoding information is provided in this embodiment. The system bandwidth is divided into at least 1 bandwidth part (BP). The subband in this embodiment is a virtual subband, the virtual subband is equal to the BP in size, and the size of the virtual subband may be the same as or different from the size of a subband defined in the actual system. The method comprises:

1301. A terminal obtains precoding information of a first subband, namely, a first BP, according to preset criterion, and calculates CQI of the first subband based on the precoding information of the first subband. The first BP may be obtained according to a predefined criterion, for example, through consecutive scanning in the order of increasing frequency according to different reporting subframes.

Specifically, after the first subband is obtained, the precoding information of the first subband is calculated according to the preset criterion 5, as expressed in formula (5). Moreover, the CQI of the first subband is calculated based on the precoding information of the first subband. That is, the calculation of the CQI is based on the assumption that the first subband uses the precoding information of the first subband.

Further, referring to FIG. 13, after the precoding information and the CQI of the first subband are determined, the method may further comprise:

1302. The terminal feeds back the precoding information and CQI of the first subband to a data transmitting end.

Specifically, the terminal performs encoding of the first subband's precoding information (if a single codebook is applied) obtained in step 1301 or corresponding frequency selectivity precoding information (if a dual codebook structure is applied, and, in this case, wideband precoding information may be fed back separately) and the CQI, and feeds back the encoded information to the data transmitting end through a PUCCH. Nevertheless, the encoded information may also be fed back to the data transmitting end through a PUSCH instead.

1303. The data transmitting end receives the precoding information and the CQI of the first subband.

It should be noted that the BP may include one or more subbands defined in the actual system.

Further, the wideband precoding information and the precoding information of the first subband may be reported in the same subframe or in different subframes.

Through the method for transmitting and receiving the precoding information in this embodiment, the system bandwidth is divided into at least 1 BP, the precoding information and the CQI of the subband are obtained and fed back, which further improves precoding performance of the system and facilitates frequency domain scheduling and modulation coding mode selection.

## Embodiment 15

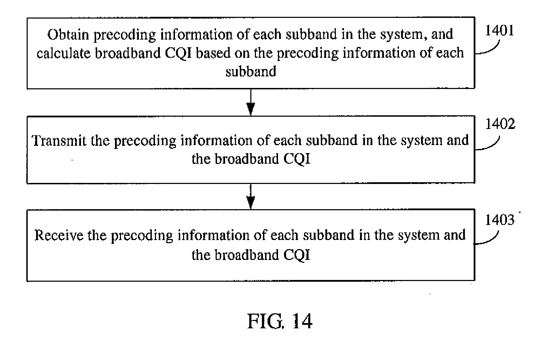

Referring to FIG. 14, a method for transmitting and receiving precoding information is provided in this embodiment. The system bandwidth is divided into at least 1 bandwidth part (BP). The subband in this embodiment is a virtual subband, the virtual subband is equal to the BP in size, and the size of the virtual subband may be the same as or different from the size of a subband defined in the actual system. The method comprises:

1401. A terminal obtains the precoding information of each subband, namely, each BP, in the system according to a preset criterion, and calculates wideband CQI of the system bandwidth according to the precoding information of each subband.

Specifically, the precoding information of each subband is calculated according to the preset criterion 5, as expressed in formula (5). Further, the wideband CQI is calculated according to the precoding information of each subband. That is, the CQI calculation is based on an assumption that each subband uses the precoding information of each subband respectively.

Further, as shown in FIG. 14, after the precoding information of each subband and the wideband CQI are determined, the method may further comprise:

1402. The terminal feeds back the precoding information of each subband and the wideband CQI to a data transmitting end.

Specifically, the terminal performs encoding of each subband's precoding information (if a single codebook is applied) obtained in step 1401 or corresponding frequency selectivity precoding information (if a dual codebook structure is applied, and, in this case, wideband precoding information may be fed back separately) and the wideband CQI, and feeds back the encoded information to the data transmitting end through a PUCCH. Nevertheless, the encoded information may also be fed back to the data transmitting end through a PUSCH instead.

1403. The data transmitting end receives the precoding information of each subband and the wideband CQI.

It should be noted that the BP may include one or more subbands defined in the actual system.

Further, the wideband precoding information and the precoding information of the BP may be reported in the same subframe or in different subframes.

Through the method for transmitting and receiving the precoding information in this embodiment, the system bandwidth is divided into at least 1 BP, the precoding information and the wideband CQI are obtained and fed back, which further improves precoding performance of the system and facilitates frequency domain scheduling and modulation coding mode selection.

## Embodiment 16

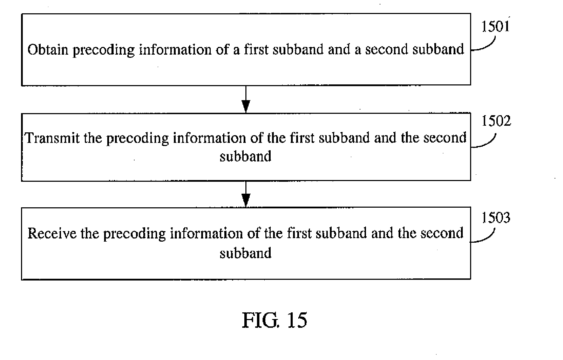

Referring to FIG. 15, a method for transmitting and receiving precoding information is provided in this embodiment. The system bandwidth is divided into at least 2 bandwidth parts (BP). The subband in this embodiment is a virtual subband, the virtual subband is equal to the BP in size, and the size of the virtual subband may be the same as or different from the size of a subband defined in the actual system. The method comprises:

1501. A terminal obtains precoding information of a first subband (namely, a first BP) and a second subband (namely, a second BP) according to a preset criterion. The first BP and the second BP may be obtained through consecutive scanning in the order of increasing frequency according to different reporting subframes, or according to another predefined rule.

Specifically, after the selected first subband and second subband are obtained, the precoding information of the first subband and the second subband is calculated according to the preset criterion 5, as expressed in formula (5).

Further, referring to FIG. 15, after the precoding information of the first subband and the second subband is determined, the method may further comprise:

1502. The terminal feeds back the precoding information of the first subband and the second subband to a data transmitting end.

Specifically, the terminal performs encoding of the first subband's and the second subband's precoding information (if a single codebook is applied) obtained in step 1501 or the corresponding frequency selective precoding information (if a dual codebook structure is applied, and, in this case, wideband precoding information may be fed back separately), and feeds back the encoded information to the data transmitting end through a PUCCH. Nevertheless, the encoded information may also be fed back to the data transmitting end through a PUSCH instead.

1503. The data transmitting end receives the precoding information of the first subband and the second subband.

It should be noted that the BP may include one or more subbands defined in the actual system.

Further, the wideband precoding information and the precoding information of the subband may be reported in the same subframe or in different subframes.

Through the method for transmitting and receiving the precoding information in this embodiment, the system bandwidth is divided into at least 2 BPs, the precoding information of the BPs are obtained and fed back, which further improves precoding performance of the system.

## Embodiment 17

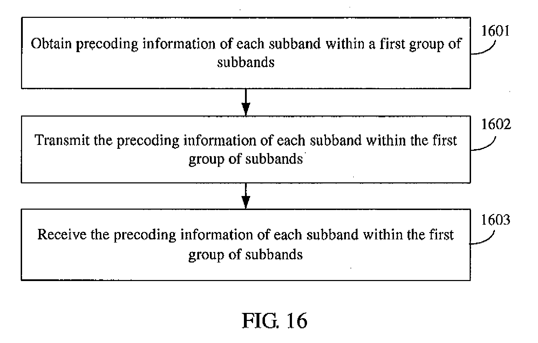

Referring to FIG. 16, a method for transmitting and receiving precoding information is provided in this embodiment. The system bandwidth is divided into at least 1 bandwidth part (BP), and all BPs are grouped into at least 1 group. The subband in this embodiment is a virtual subband, the virtual subband is equal to the BP in size, and the size of the virtual subband may be the same as or different from the size of a subband defined in the actual system. The method comprises:

1601. A terminal obtains the precoding information of each subband in the first group of subbands according to a preset criterion. Each subband in the first group of subbands is respectively equivalent to a BP. The BP corresponding to the first group of subbands may be obtained through consecutive scanning in ascending order of frequencies or obtained according to another predefined rule. Specifically, the precoding information of each subband in the first group of subbands is calculated according to the preset criterion 5, as expressed in formula (5).

Further, as shown in FIG. 16, after precoding information of each subband in the first group of subbands is determined, the method may further comprise:

1602. The terminal feeds back the precoding information of each subband in the first group of subbands to a data transmitting end.

Specifically, the terminal performs encoding of the precoding information of each subband in the first group of subbands (if a single codebook is applied), which is obtained in step 1601, or corresponding frequency selective precoding information (if a dual codebook structure is applied, and, in this case, wideband precoding information may be fed back separately), and feeds back the encoded information to the data transmitting end through a PUCCH. Nevertheless, the encoded information may also be fed back to the data transmitting end through a PUSCH instead.

1603. The data transmitting end receives the precoding information of each subband in the first group of subbands.

It should be noted that the BP may include one or more subbands defined in the actual system.

Further, the wideband precoding information and the precoding information of each subband in the first group of subbands may be reported in the same subframe or in different subframes.

Through the method for transmitting and receiving the precoding information in this embodiment, the system bandwidth is divided into at least 1 BP, the precoding information of the subband is obtained and fed back in groups, which further improves precoding performance of the system.

## Embodiment 18

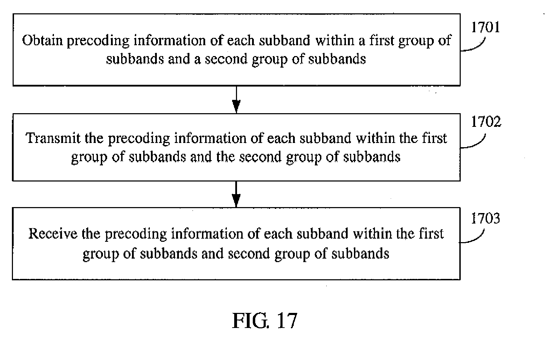

Referring to FIG. 17, a method for transmitting and receiving precoding information is provided in this embodiment. The system bandwidth is divided into at least 2 bandwidth parts (BPs), and all BPs are grouped into at least 2 groups. The subband in this embodiment is a virtual subband, the virtual subband is equal to the BP in size, and the size of the virtual subband may be the same as or different from the size of a subband defined in the actual system. The method comprises:

1701. A terminal obtains precoding information of each subband in a first group of subbands and a second group of subbands according to a preset criterion. Each subband in the first group of subbands and the second group of subbands is respectively equivalent to a BP. The BP corresponding to the first group of subbands and the second group of subbands may be obtained through consecutive scanning in the order of increasing frequency or obtained according to another predefined rule. Specifically, the precoding information of each subband in the first group of subbands and the second group of subbands is calculated according to the preset criterion 5, as expressed in formula (5).

Further, referring to FIG. 17, after the precoding information of each subband in the first group of subbands and the second group of subbands is determined, the method may further comprise:

1702. The terminal feeds back the precoding information of each subband in the first group of subbands and the second group of subbands to a data transmitting end.

Specifically, the terminal performs encoding of the precoding information of each subband in the first group of subbands and the second group of subbands (if a single codebook is applied), which is obtained in step 1701, or corresponding frequency selective precoding information (if a dual codebook structure is applied, and, in this case, wideband precoding information may be fed back separately), and feeds back the encoded information to the data transmitting end through a PUCCH. Nevertheless, the encoded information may also be fed back to the data transmitting end through a PUSCH instead.

1703. The data transmitting end receives the precoding information of each subband in the first group of subbands and the second group of subbands.

It should be noted that the BP may include one or more subbands defined in the actual system.

Further, the wideband precoding information and the precoding information of each subband in the first group of subbands and the second group of subbands may be reported in the same subframe or in different subframes.

Through the method for transmitting and receiving the precoding information in this embodiment, the system bandwidth is divided into at least 2 BPs, the precoding information of the subbands are obtained and fed back in groups, which further improves precoding performance of the system.


**Embodiment 19**

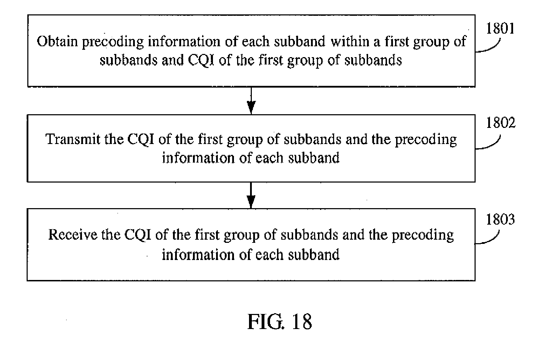

Referring to FIG. 18, a method for transmitting and receiving precoding information is provided in this embodiment. The system bandwidth is divided into at least 1 bandwidth part (BP), and all BPs are grouped into at least 1 group. The subband in this embodiment is a virtual subband, the virtual subband is equal to the BP in size, and the size of the virtual subband may be the same as or different from the size of a subband defined in the actual system. The method comprises:

1801. A terminal obtains precoding information of each subband in a first group of subbands according to a preset criterion. Each subband in the first group of subbands is respectively equivalent to a BP. The BP corresponding to the first group of subbands may be obtained through consecutive scanning in the order of increasing frequency or obtained according to another predefined rule. Specifically, the precoding information of each subband in the first group of subbands is calculated according to the preset criterion 5, as expressed in formula (5).

Further, the method comprises: calculating CQI of the first group of subbands. The CQI is calculated according to the precoding information of each subband in the first group of subbands, and is called CQI of the first group of subbands.

Further, referring to FIG. 18, after the CQI of the first group of subbands and the precoding information of each subband are determined, the method may further comprise:

1802. The terminal feeds back the CQI of the first group of subbands and the precoding information of each subband to a data transmitting end.

Specifically, the terminal performs encoding of the CQI of the first group of subbands and the precoding information of each subband (if a single codebook is applied), which are obtained in step 1801, or corresponding frequency selectivity precoding information (if a dual codebook structure is applied, and, in this case, wideband precoding information may be fed back separately), and feeds back the encoded information to the data transmitting end through a PUCCH. Nevertheless, the encoded information may also be fed back to the data transmitting end through a PUSCH instead.

1803. The data transmitting end receives the CQI of the first group of subbands and the precoding information of each subband.

It should be noted that the BP may include one or more subbands defined in the actual system.

Further, the wideband precoding information, and the CQI of the first group of BPs and the precoding information of each BP may be reported in the same subframe or in different subframes.

Through the method for transmitting and receiving the precoding information in this embodiment, the system bandwidth is divided into at least 1 BP, the precoding information of the subband is obtained and fed back in groups, which further improves precoding performance of the system. Further, the CQI of a group of BPs is provided, which facilitates frequency domain scheduling and modulation coding mode selection.

**Embodiment 20**

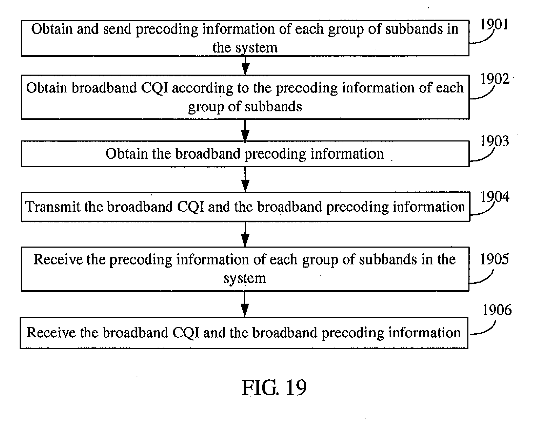

Referring to FIG. 19, a method for transmitting and receiving precoding information is provided in this embodiment. The system bandwidth is divided into at least 1 bandwidth part (BP), and all BPs are grouped into at least 1 group. The subband in this embodiment is a virtual subband, the virtual subband is equal to the BP in size, and the size of the virtual subband may be the same as or different from the size of a subband defined in the actual system. The method comprises:

1901. A terminal transmits precoding information of all groups of subbands in the system through a same subframe or different subframes according to any one of embodiments 17-18.

Further, after the terminal transmits the precoding information of all groups of subbands in the system, the method further comprises:

1902. The terminal calculates the wideband CQI according to the precoding information of each subband described in step 1901. Specifically, the calculation of the wideband CQI is based on an assumption that each group of subbands uses their respective precoding information.

Further, the method may comprise:

1903. The terminal obtains wideband precoding information according to preset criterion. Specifically, the terminal may calculate the wideband precoding information according to the preset criterion 4 through formula (4).

Further, the method may comprise:

1904. The terminal feeds back the CQI obtained in step 1902 and the wideband precoding information obtained in step 1903 to the data transmitting end.

Specifically, the terminal performs encoding of the wideband CQI obtained in step 1902 and the wideband precoding information obtained in step 1903, and feeds back the encoded information to the data transmitting end through a PUCCH. Nevertheless, the encoded information may also be fed back to the data transmitting end through a PUSCH instead.

1905. The data transmitting end receives the precoding information of all groups of subbands in the system, where the precoding information is transmitted by the terminal through the same subframe or different subframes.

It should be noted that the precoding information of each group of subbands, which is transmitted through the same subframe or different subframes in step 1905, is consistent with the precoding information of each group of subbands, which is transmitted through the same subframe or different subframes in step 1901.

1906. The data transmitting end receives the wideband CQI and wideband precoding information transmitted by the terminal.

It should be noted that the wideband CQI and the wideband precoding information described in step 1906, are consistent with the wideband CQI described in step 1902 and the wideband precoding information described in step 1903, respectively.

Further, the wideband precoding information obtained by the terminal in step 1903 is used only as wideband precoding information part of the precoding information that will be used by the terminal to obtain the precoding information of the subband subsequently. The precoding information of each group of subbands in step 1901 is used only as the last wideband precoding information that can be reported by the terminal at the time of obtaining the precoding information of each group of subbands.

Further, the subframe for reporting the wideband CQI and the wideband precoding information may be the same as or different from the subframe for reporting the precoding information of each group of subbands.

It should be noted that the BP may include one or more subbands defined in the actual system.

Through the method for transmitting and receiving the precoding information in this embodiment, the system bandwidth is divided into at least 1 BP, the precoding information of the subband is obtained and fed back in groups, which further improves the precoding performance of the system. Further, the wideband CQI is fed back according to the precoding information of each group of subbands, which facilitates more precise selection of the modulation coding mode. The wideband precoding information is provided at the time of providing the wideband CQI, and public wideband precoding information is provided for each group of subbands.

**Embodiment 21**

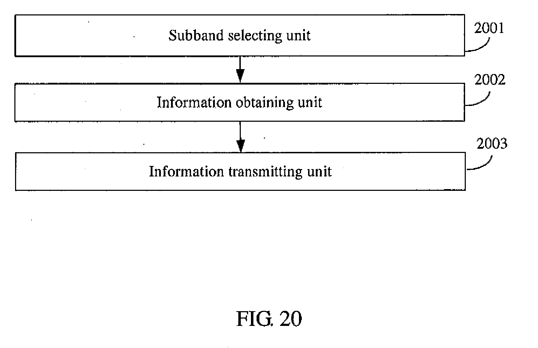

Referring to FIG. 20, corresponding to the foregoing method embodiments, an apparatus for transmitting precoding information is provided in this embodiment. The apparatus is applicable to a system in which the bandwidth is divided into at least 1 bandwidth part (BP), and each BP includes at least one subband. The apparatus comprises:

a subband selecting unit 2001, configured to select a subband within a first BP according to preset criterion or a predefined rule;

an information obtaining unit 2002, configured to obtain precoding information of the subband selected by the subband selecting unit within the first BP; and

an information transmitting unit 2003, configured to transmit the precoding information of the subband selected within the first BP, where the precoding information is obtained by the information obtaining unit.

To adapt to the scenario in which the system bandwidth is divided into at least 2 bandwidth parts (BPs):

the subband selecting unit 2001 is further configured to select a subband within a second BP according to the preset criterion or the predefined rule;

the information obtaining unit 2002 is further configured to obtain precoding information of the subband selected by the subband selecting unit within the second BP; and

the information transmitting unit 2003 is further configured to transmit the precoding information of the subband selected within the second BP, where the precoding information is obtained by the information obtaining unit.

Further, the information transmitting unit 2003 is specifically configured to: through a physical uplink control channel (PUCCH), transmit the precoding information of the subband selected within the first BP; and, through the PUCCH, transmit the precoding information of the subband selected within the second BP, where the subframe for transmitting the precoding information of the subband selected within the first BP is the same as or different from the subframe for transmitting the precoding information of the subband selected within the second BP.

Further, the subband selecting unit 2001 is specifically configured to: select a subband with the greatest capacity or throughput within the first BP, or select a subbandwith in the first BP according to preset order of reporting.

The information obtaining unit 2002 is further configured to obtain CQI of the subband selected within the first BP according to the precoding information of the subband selected in the first BP.

The information transmitting unit 2003 is further configured to: through the PUCCH, transmit the CQI of the subband selected within the first BP, where the subframe for transmitting the CQI is the same as the subframe for transmitting the precoding information of the subband selected within the first BP.

Further, the information transmitting unit 2003 is configured to: perform joint encoding of the CQI of the subband selected within the first BP and the precoding information of the subband selected within the first BP to obtain jointly encoded information, and transmit the jointly encoded information in the same subframe through a PUCCH; or, perform joint encoding of the CQI of the subband selected within the first BP, the precoding information of the subband selected in the first BP, and the identifier of the subband selected within the first BP to obtain jointly encoded information, and transmit the jointly encoded information in the same subframe through the PUCCH.

The apparatus in embodiment 21 may be a terminal.

Through the apparatus for transmitting the precoding information in this embodiment, the system bandwidth is divided into at least one BP, the subband is selected within the BP, and the precoding information of the subband is obtained, which further improves precoding performance of the subband. The selected subband has a greater probability of being scheduled to the UE, which improves the overall performance of the system.

**Embodiment 22**

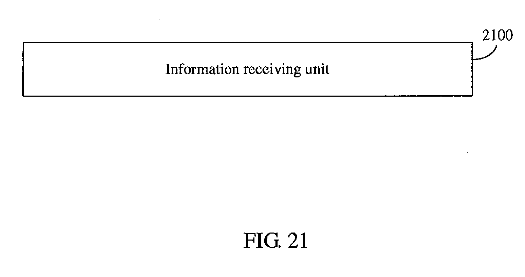

Referring to FIG. 21, corresponding to the foregoing method embodiments, an apparatus for receiving precoding information is provided in this embodiment. The apparatus is applicable to a system in which the bandwidth is divided into at least 1 bandwidth part (BP), and each BP includes at least one subband. The apparatus comprises:

an information receiving unit 2100, configured to receive precoding information of a subband selected within a first BP, where the precoding information is transmitted by a terminal,

where the subband selected within the first BP is selected by the terminal according to preset criterion or a predefined rule.

Through the apparatus for receiving the precoding information in this embodiment, the system bandwidth is divided into at least one BP, the subband is selected by the terminal within the BP, and the precoding information of the subband is received, which further improves precoding performance of the subband. The selected subband has a greater probability of being scheduled to the UE, which improves the overall performance of the system.

The data transmitting end in the embodiments above may be a NodeB (NodeB), BS (Base station, base station), home eNodeB, or relay station; terminal in the embodiments above may be UE (User Equipment, user equipment) or MS (Mobile Station, mobile station).

Through the apparatus for transmitting and receiving the precoding information in this embodiment, the system bandwidth is divided into at least two BPs, the subband is selected within the BP, and the precoding information of the subband is obtained, which further improves the precoding performance of the subband. The selected subband has a greater probability of being scheduled to the UE, which improves the overall performance of the system.

All or part of the contents in the technical solution provided in the foregoing embodiments may be implemented through software programs, and the software programs are stored in readable storage media such as computer hard disk, CD-ROM, or floppy disk.

The above embodiments are merely preferred embodiments of the present invention, but are not intended to limit the scope of the present invention. Any modifications, variations or replacement that can be easily derived by those skilled in the art without departing from the spirit and principle of the invention should fall within the protection scope of the present invention.

**Claims**

1. A method for transmitting precoding information, wherein a system bandwidth is divided into at least 1 bandwidth part (BP) and each BP comprises at least one subband, the method comprising:

   selecting a subband within a first BP according to a preset criterion or a predefined rule; and
   obtaining and transmitting precoding information of the subband selected within the first BP.

2. The method according to claim 1, wherein the system bandwidth is divided into at least 2 bandwidth parts (BPs), and the method further comprises:

   selecting a subband within a second BP according to the preset criterion or the predefined rule; and
   obtaining and transmitting precoding information of the subband selected within the second BP.

3. The method according to claim 2, wherein:

   the transmitting the precoding information of the subband selected within the first BP comprises:

      through a physical uplink control channel (PUCCH), transmitting the precoding information of the subband selected within the first BP; and
      the transmitting the precoding information of the subband selected within the second BP comprises:

         through the PUCCH, transmitting the precoding information of the subband selected within the second BP, wherein a subframe for transmitting the precoding information of the subband selected within the second BP is the same as or different from a subframe for transmitting the precoding information of the subband selected in the first BP.

4. The method according to any one of claims 1-3, wherein:

   the selecting the subband within the first BP according to the preset criterion comprises:

      selecting the subband with a greatest capacity or throughput within the first BP;
      the selecting the subband within the first BP according to the predefined rule comprises:

         selecting the subband within the first BP according to a preset order of reporting.

5. The method according to any one of claims 1-4, wherein:

   the transmitting the precoding information of the subband selected within the first BP comprises:

      through a PUCCH, transmitting the precoding information of the subband selected within the first BP; and the method further comprises:

         obtaining a CQI of the subband selected within the first BP according to the precoding information of the subband selected within the first BP; and
         through the PUCCH, transmitting the CQI of the subband selected within the first BP, wherein a subframe for transmitting the CQI is the same as a subframe for transmitting the precoding information of the subband selected within the first BP.

6. The method according to claim 5, wherein:

the transmitting the precoding information of the subband selected within the first BP through the PUCCH, and the transmitting the CQI of the subband selected within the first BP through the PUCCH, wherein the subframe for transmitting the precoding information is the same as the subframe for transmitting the CQI, comprises:

performing a joint encoding of the CQI of the subband selected within the first BP and the precoding information of the subband selected within the first BP to obtain jointly encoded information; and transmitting the jointly encoded information in the same subframe through the PUCCH; or performing a joint encoding of the CQI of the subband selected within the first BP, the precoding information of the subband selected within the first BP, and an identifier information of the subband selected within the first BP to obtain jointly encoded information; and transmitting the jointly encoded information in the same subframe through the PUCCH.

7. A method for receiving precoding information, wherein a system bandwidth is divided into at least 1 bandwidth part (BP) and each BP comprises at least one subband, the method comprising:

receiving precoding information of a subband selected within a first BP transmitted by a terminal, wherein the subband selected within the first BP is selected by the terminal according to a preset criterion or a predefined rule.

8. The method according to claim 7, wherein the system bandwidth is divided into at least 2 bandwidth parts (BPs), and the method further comprises:

deceiving precoding information of a subband selected within a second BP transmitted by the terminal, wherein the subband selected within the second BP is selected by the terminal according to the preset criterion or the predefined rule.

9. The method according to claim 8, wherein:

the receiving the precoding information of the subband selected within the first BP transmitted by the terminal comprises:

receiving the precoding information of the subband selected within the first BP, wherein the precoding information is transmitted by the terminal through a physical uplink control channel (PUCCH); and the receiving the precoding information of the subband selected within the second BP transmitted by the terminal comprises:

receiving the precoding information of the subband selected within the second BP, wherein the precoding information is transmitted by the terminal through the PUCCH, and a subframe for transmitting the precoding information of the subband selected within the second BP is the same as or different from a subframe for transmitting the precoding information of the subband selected in the first BP.

10. An apparatus for transmitting precoding information, wherein the apparatus is applicable to a scenario in which a system bandwidth is divided into at least 1 bandwidth part (BP) and each BP comprises at least one subband, the apparatus comprising:

a subband selecting unit, configured to select a subband within a first BP according to a preset criterion or a predefined rule; an information obtaining unit, configured to obtain precoding information of the subband selected by the subband selecting unit within the first BP; and an information transmitting unit, configured to transmit the precoding information of the subband selected in the first BP, wherein the precoding information is obtained by the information obtaining unit.

11. The apparatus according to claim 10, wherein: the apparatus is applicable to a scenario in which the system bandwidth is divided into at least 2 bandwidth parts (BPs);
the subband selecting unit is further configured to select a subband within a second BP according to the preset criterion or the predefined rule;
the information obtaining unit is further configured to obtain precoding information of the subband selected by the subband selecting unit within the second BP; and
the information transmitting unit is further configured to transmit the precoding information of the subband selected within the second BP, wherein the precoding information is obtained by the information obtaining unit,

12. The apparatus according to claim 11, wherein:

the information transmitting unit is specifically configured to: through a physical uplink control channel (PUCCH), transmit the precoding information of the subband selected in the first BP; and, through the PUCCH, transmit the precoding information of the subband selected within the second BP, wherein a subframe for transmitting the precoding information of the subband selected in the first BP is the same as or different from a subframe for transmitting the precoding information of the subband selected in the second BP.

13. The apparatus according to any one of claims 10-12, wherein:

the subband selecting unit is specifically configured to: select the subband with a greatest capacity or throughput within the first BP, or select a subband within the first BP according to a preset order of reporting.

14. The apparatus according to any one of claims 10-13, wherein:

the information obtaining unit is further configured to obtain a CQI of the subband selected in the first BP according to the precoding information of the subband selected within the first BP; and
the information transmitting unit is further configured to: through a PUCCH, transmit the CQI of the subband selected in the first BP, wherein a subframe for transmitting the CQI is the same as a subframe for transmitting the precoding information of the subband selected in the first BP.

15. The apparatus according to claim 14, wherein:

the information transmitting unit is configured to: perform a joint encoding of the CQI of the subband selected in the first BP and the precoding information of the subband selected within the first BP to obtain jointly encoded information, and transmit the jointly encoded information in the same subframe through the PUCCH; or, perform a joint encoding of the CQI of the subband selected within the first BP, the precoding information of the subband selected within the first BP, and an identifier of the subband selected within the first BP to obtain jointly encoded information, and transmit the jointly encoded information in the same subframe through the PUCCH.

16. An apparatus for receiving precoding information, wherein the apparatus is applicable to a scenario in which a system bandwidth is divided into at least 1 bandwidth part (BP) and each BP comprises at least one subband, the apparatus comprising:

an information receiving unit, configured to receive precoding information of a subband selected within a first BP transmitted by a terminal,
wherein the subband selected within the first BP is selected by the terminal according to a preset criterion or a predefined rule.

17. The apparatus according to claim 16, wherein: the apparatus is applicable to a scenario in which the system bandwidth is divided into at least 2 bandwidth parts (BPs), and the apparatus comprises:

the information receiving unit, further configured to receive precoding information of a subband selected within a second BP transmitted by the terminal,
wherein the subband selected within the second BP is selected by the terminal according to a preset criterion.

18. The apparatus according to claim 17, wherein:

the information receiving unit is further configured to: receive the precoding information of the subband selected within the second BP and the precoding information of the subband selected within the first BP transmitted by the terminal through the PUCCH, wherein a subframe for transmitting the precoding information of the subband selected within the second BP is the same as or different from a subframe for transmitting the precoding information of the subband selected within the first BP.

Select a subband within the first BP according to a preset criterion, and obtain precoding information of the subband
101

Transmit the identifier and precoding information of the subband selected within the first BP
102

Receive the identifier and precoding information of the subband within the first BP
103

FIG. 1

Determine a subband within the first BP according to a preset rule, and obtain precoding information of the subband | 201

Transmit the precoding information of the determined subband within the first BP | 202

Receive the precoding information of the subband determined within the first BP | 203

FIG. 2

Select a subband within a first BP and a second BP respectively
according to preset criteria, and obtain precoding information of the
subbands
301

Transmit identifiers and precoding information of the subbands
selected within the first BP and the second BP
302

Receive the identifiers and precoding information of the subbands
within the first BP and the second BP
303

FIG. 3

Determine a subband within a first BP and a second BP respectively according to a preset rule, and obtain precoding information of the subbands  401

Transmit the precoding information of the determined subbands within the first BP and the second BP  402

Receive the precoding information of the subbands within the first BP and the second BP  403

FIG. 4

Select a subband within a first BP according to preset criterion, and obtain precoding information and CQI of the subband

501

Transmit the identifier, precoding information and CQI of the subband selected within the first BP

502

Receive the identifier, precoding information, and CQI of the subband within the first BP

503

FIG. 5

Determine a subband within a first BP according to a preset rule, and obtain precoding information and CQI of the subband

601

Transmit the precoding information and CQI of the determined subband within the first BP

602

Receive the precoding information and CQI of the subband within the first BP

603

FIG. 6

```
┌────────────────────────────────────────────────────────┐   701
│ Select a subband within a first BP and a second BP        │  ⌐╯
│ respectively according to preset criterion, and obtain    │
│ precoding information and CQI of the subbands             │
└────────────────────────────────────────────────────────┘
                            │
                            ▼
┌────────────────────────────────────────────────────────┐   702
│ Transmit identifier, precoding information and CQI of the │   ⌐╯
│ subbands selected within the first BP and the second BP   │
└────────────────────────────────────────────────────────┘
                            │
                            ▼
┌────────────────────────────────────────────────────────┐   703
│ Receive the identifiers, precoding information and CQI of │   ⌐╯
│ the subbands within the first BP and the second BP        │
└────────────────────────────────────────────────────────┘
```

FIG. 7

Determine a subband within a first BP and a second BP respectively according to a preset rule, and obtain precoding information and CQI of the subbands ⟍ 801

Transmit the precoding information and CQI of the determined subbands within the first BP and the second BP ⟍ 802

Receive the precoding information and CQI of the subband within the first BP and the second BP ⟍ 803

FIG. 8

```
┌────────────────────────────────────────────────────────────┐   901
│  Select a subband within a first BP and a second BP respectively │
│  according to preset criterion, obtain precoding information of the │
│  subbands, and calculates CQI of all selected subbands       │
└────────────────────────────────────────────────────────────┘

                            │
                            ▼

┌────────────────────────────────────────────────────────────┐   902
│  Transmit identifier, precoding information and CQI of all subbands │
│  selected within the first BP and the second BP              │
└────────────────────────────────────────────────────────────┘

                            │
                            ▼

┌────────────────────────────────────────────────────────────┐   903
│  Receive the identifier, precoding information and CQI of all subbands │
│  within the first BP and the second BP                       │
└────────────────────────────────────────────────────────────┘
```

FIG. 9

Determine a subband within a first BP and a second BP respectively
according to a preset rule, and obtain precoding information and CQI
of all selected subbands | 1001

Transmit the precoding information and CQI of all subbands selected
within the first BP and the second BP | 1002

Receive the precoding information and CQI of all subbands selected
within the first BP and the second BP | 1003

FIG. 10

Obtain broadband precoding information — 1101

Transmit the broadband precoding information — 1102

Receive the broadband precoding information — 1103

FIG. 11

| Obtain precoding information of a first subband | 1201 |
| --- | --- |

| Transmit the precoding information of the first subband | 1202 |
| --- | --- |

| Receive the precoding information of the first subband | 1203 |
| --- | --- |

FIG. 12

Obtain precoding information of a first subband, and calculate CQI of
the subband based on precoding information

1301

Transmit the precoding information and CQI of the first subband

1302

Receive the precoding information and CQI of the first subband

1303

FIG. 13

Obtain precoding information of each subband in the system, and calculate broadband CQI based on the precoding information of each subband | 1401

Transmit the precoding information of each subband in the system and the broadband CQI | 1402

Receive the precoding information of each subband in the system and the broadband CQI | 1403

FIG. 14

Obtain precoding information of a first subband and a second subband — 1501

Transmit the precoding information of the first subband and the second subband — 1502

Receive the precoding information of the first subband and the second subband — 1503

FIG. 15

Obtain precoding information of each subband within a first group of subbands
1601

Transmit the precoding information of each subband within the first group of subbands
1602

Receive the precoding information of each subband within the first group of subbands
1603

FIG. 16

Obtain precoding information of each subband within a first group of subbands and a second group of subbands

1701

Transmit the precoding information of each subband within the first group of subbands and the second group of subbands

1702

Receive the precoding information of each subband within the first group of subbands and second group of subbands

1703

FIG. 17

Obtain precoding information of each subband within a first group of subbands and CQI of the first group of subbands   1801

Transmit the CQI of the first group of subbands and the precoding information of each subband   1802

Receive the CQI of the first group of subbands and the precoding information of each subband   1803

FIG. 18

Obtain and send precoding information of each group of subbands in the system    1901

Obtain broadband CQI according to the precoding information of each group of subbands    1902

Obtain the broadband precoding information    1903

Transmit the broadband CQI and the broadband precoding information    1904

Receive the precoding information of each group of subbands in the system    1905

Receive the broadband CQI and the broadband precoding information    1906

FIG. 19

| Subband selecting unit | 2001 |
| Information obtaining unit | 2002 |
| Information transmitting unit | 2003 |

FIG. 20

2100

| Information receiving unit |
|---|

FIG. 21

# INTERNATIONAL SEARCH REPORT

| | International application No. |
|---|---|
| | PCT/CN2011/073987 |

## A. CLASSIFICATION OF SUBJECT MATTER

H04L 1/00 （2006.01）i

According to International Patent Classification (IPC) or to both national classification and IPC

## B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CPRSABS; CNTXT; CNKI; VEN: pre-coding, PMI, band part, BP, sub-band, CQI, sub frame, throughput, capacity

## C. DOCUMENTS CONSIDERED TO BE RELEVANT

| Category* | Citation of document, with indication, where appropriate, of the relevant passages | Relevant to claim No. |
|---|---|---|
| X | CN101615984A (ZTE CORP) 30 Dec. 2009 (30.12.2009)<br>the description page 2 last paragraph 2, page 3 last paragraph 1 to page 4 paragraph 2, page 7 last paragraphs 2-3 | 1-18 |
| A | CN101400074A (SHARP KABUSHIKI LAISHA) 01 Apr. 2009 (01.04.2009)<br>the whole document | 1-18 |
| A | US20090116570A1 (INTERDIGITAL PATENT HOLDINGS INC.) 07 May 2009 (07.05.2009)<br>the whole document | 1-18 |
| A | WO2009096708A1 (LG CEECTRONICS INC.) 06 Aug. 2009 (06.08.2009)<br>the whole document | 1-18 |
| A | WO2009131163A1 (SHARP KABUSHIKI LAISHA) 29 Oct. 2009 (29.10.2009)<br>the whole document | 1-18 |

☐ Further documents are listed in the continuation of Box C.  ☒ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim (S) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"document member of the same patent family |

| Date of the actual completion of the international search | Date of mailing of the international search report |
|---|---|
| 04 Jul. 2011 (04.07.2011) | **18 Aug. 2011 (18.08.2011)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>TIAN, Shan<br><br>Telephone No. (86-10)62411299 |
|---|---|

Form PCT/ISA /210 (second sheet) (July 2009)

## INTERNATIONAL SEARCH REPORT
### Information on patent family members

International application No.

PCT/CN2011/073987

| Patent Documents referred in the Report | Publication Date | Patent Family | Publication Date |
|---|---|---|---|
| CN101615984A | 30.12.2009 | WO2011015097A1 | 10.02.2011 |
| CN101400074A | 01.04.2009 | None | |
| US20090116570A1 | 07.05.2009 | WO2009059039A2 | 07.05.2009 |
| | | WO2009059039A3 | 30.07.2009 |
| | | TW200922194A | 16.05.2009 |
| | | AR069162A1 | 06.01.2010 |
| WO2009096708A1 | 06.08.2009 | KR20090083834A | 04.08.2009 |
| | | US20100310000A1 | 09.12.2010 |
| WO2009131163A1 | 29.10.2009 | EP2280568A1 | 02.02.2011 |
| | | US2011038354A1 | 17.02.2011 |
| | | JP2011055505A | 17.03.2011 |
| | | JP4594451B2 | 08.12.2010 |
| | | CN102017690A | 13.04.2011 |
| | | MX2010011494A | 30.11.2010 |

Form PCT/ISA /210 (patent family annex) (July 2009)